# EUROPÄISCHE PATENTANMELDUNG

(11) **EP 1 603 271 A1**
(43) Veröffentlichungstag der Anmeldung: **07.12.2005**
(21) Anmeldenummer: 04012938.9
(22) Anmeldetag: 01.06.2004
(51) Int. Cl.: H04L 12/24

(54) **Topology handler**

(71) Anmelder: SIEMENS AKTIENGESELLSCHAFT, 80333 München (DE)
(72) Erfinder: Frantz, Michael, 81737 München (DE)

(57) **Zusammenfassung**

Zur Kopplung von mehreren Management Applikationen OLM, ETM, NML, EM eines Operations Systems OS wird ein zentraler Topology Handler TPG eingeführt, dem die Zuordnung von Resourcen TP, CC, CON, PATH, VLAN eines Kommunikationsnetzes KN zu den Applikationen zumindest teilweise bekannt ist. Abfragen von Resourcen werden unter Vermittlung durch den Topology Handler zu der jeweils zuständigen Applikation A vermittelt.

## Beschreibung

In dem internationalen Standard M.3010 (02/2000) der ITU-T ist eine Referenzarchitektur eines Telecommunications Management Network (TMN) zur Überwachung und Steuerung eine Netzes für Telekommunikationsanwendungen beschrieben, bei der davon ausgegangen wird, dass das von dem TMN gesteuerte Netz unterschiedliche Typen von Netzelementen umfasst, die üblicherweise mit Hilfe von unterschiedlichen Kommunikationsmechanismen (d.h. Protokollen, Meldungen, Management Informationen - auch Objektmodell genannt) gesteuert werden.

Dieses TMN umfasst folgende Funktionalitäten:
- Operations Systems Function (OSF), die das "eigentliche" Management des Telekommunikationsnetzes realisiert.
- Workstation Function (WSF), die zur Darstellung der Steuervorgänge und des Netzzustandes für einen menschlichen Anwender des TMN dient.
- Network Element Function (NEF), die eine Schnittstelle zur Steuerung der Telekommunikations-Funktionen der Netzelemente darstellt. Die Schnittstelle definiert den spezifischen Kommunikationsmechanismus des jeweiligen Netzelements, der ggf. nicht standardisiert ist. Die Summe aller Management Informationen des NE wird als Management Information Base (MIB) des NE bezeichnet. Sie wird im weiteren auch NE-MIB ganannt.
- Transformation Function (TF), die zur Verbindung von Komponenten mit unterschiedlichen Kommunikationsmechanismen und insbesondere zur Anbindung von Netzelementen, die keine standardisierte NEF aufweisen, an das TMN eingesetzt wird. Sie wird in dem Standard M.3010 (05/96) auch als Mediation Function bzw. als Q-Adaption Function bezeichnet.

Physikalisch ist die Funktion NEF üblicherweise in einem Netzelement (NE) angeordnet, während die Funktionen OSF und WSF üblicherweise in einem sogeanannten Operations System (OS) realisiert sind. Zwischen NE und OS kann ein Data Communication Networks (DCN) zur Übermittlung von Informationen vorgesehen sein. Die Übermittlung folgt den Prinzipien des Transportdienstes, so wie er in den unteren vier Schichten des ISO/OSI Referenzmodells im internationalen Standard X.200 beschrieben ist.

Die einzelnen TMN Funktionen werden in zeitgemäßen TMN Systemen üblicherweise von funktionsspezifischen Programmen - auch Applikation genannt - bewirkt. Sie werden von Hardware (z.B. Prozessor, i/o Baugruppe) ausgeführt, die in den Einrichtungen vorgesehen ist. Diese Ausführung wird von Supportsoftware (z.B. Multitasking bzw. Multithreading Betriebssystem, Datenbanksystem, Windows System) unterstützt.

Üblicherweise ist einem OS bzw. dessen Applikationen jeweils eine Vielzahl von NE zugeordnet. Dabei ist das OS meist zentral angeordnet, während die NE in dem Netz dezentral auf eine Vielzahl von Standorten verteilt sind.

Zur Steuerung der NE eines Kommunikationsnetzes umfasst ein OS meist mehrere Managementapplikationen, von denen unterschiedliche Netztechnologien gesteuert werden. Von den einzelnen Managementapplikationen wird dabei jeweils eine, für die jeweils gesteuerte Technologie relevante, applikationsspezfische Teilmenge der Resourcen des Netzes modelliert, visualisiert und gesteuert.

Zwischen den Teilmengen bestehen Abhängigkeiten, die häufig als geschichtete Layer ausgebildet sind. Beispielsweise ist die Vermittlungsebene eines Netzes über der Übertragungsebene angeordnet. Von der Übertragungsebene werden der Vermittlungsebene Übertragungsdienste wie z.B. 2 Mbps Standleitungen zwischen Knotenpunkten des Netzes angeboten, die von der Vermittlungsebene zur Realisierung von Vermittlungsdiensten wie z.B. einfachen Telephongesprächen (POTS, Plain Old Telephone Service) oder Mehrwertdiensten (IN, Intelligent Network) genutzt werden.

Darauf aufbauend kann zum Beispiel ein Virtual Local Area Network (VLAN) Dienst zur Verbindung von mehreren, verteilten lokalen Netzen (LAN, Local Area Networks) vorgesehen werden, der dazu entweder auf einen Vermittlungs-, unmittelbar auf einen Übertragungsdienst oder auf einen Dienst einer anderen Schicht aufsetzt.

Bei einer derart geschichten Architektur werden die voneinander abhängigen Dienste in den einzelnen Schichten jeweils von unten nach oben aktiviert, so dass bei Aktivierung eines Dienstes in einer höheren Schicht der von ihm genutze Dienst der jeweils nächst tieferen Schichten bereits aktiviert und zur Nutzung bereit ist.

Seitens der Managementapplikationen wird dieser Prozess dadurch unterstützt, dass zunächst der Dienst der tieferen Schicht mittels einer dieser Schicht zugeordneten ersten Managementapplikation aktiviert wird. Im Anschluss wird der Dienst von einer zweiten Managementapplikation zur Aktivierung eines Dienstes einer höheren Schicht angeboten und genutzt.

Beispielsweise werden bei einer Erweiterung des Netzes um neue, optische Übertragungsnetzelemente zunächst die neu in das Netz eingebrachten Netzelemente mit einer Applikation Element Manager EM aktiviert. Im Anschluss daran werden die aktivierten Netzelemente von einer Applikation Optical Link Manager OLM zur Aktivierung von hochbitratigen, optischen Links genutzt, die (auch) über die neuen Netzelemente führen.

Die neuen optischen Link werden daraufhin von einer Applikation Network Management Layer NML zur Aktivierung von niederbitratigen end-to-end (e2e) Standleitungen genutzt. Die Aktivierung weiterer Dienste folgt nun demselben Muster. Beispielsweise könnten die neuen, niederbitratigen Standleitungen zur Aktivierung von Vermittlungsdiensten genutzt werden, oder die neuen hochbitratigen zur Aktivierung von VLAN Diensten.

Nach dem bislang Ausgeführten wird klar, dass die Umsetzung der beschriebenen Architektur in konkrete Lösungen infolge der ausgeprägten Verteiltheit des Systems und der Vielzahl an unterschiedlichen Systemkomponenten und -anforderungen eine hochgradig komplexe technische Problemstellung darstellt.

Es ist Aufgabe der Erfindung, zumindest eines der bestehenden Probleme zu erkennen und durch Angabe von zumindest einer Lehre zum technischen Handeln zu lösen.

Die Erfindung beruht auf folgenden Erkenntnissen:
- Die Aktivierung eines Dienstes einer niederen Schicht wird den zweiten Managementapplikationen der höheren Schichten üblicherweise von Hand mit Hilfe von Konfigurationskommandos mitgeteilt. Erst nach dieser Mitteilung ist der neue Dienst in der zweiten Applikation bekannt und kann ab diesem Zeitpunkt von der zweiten Applikation zur Aktivierung von Diensten der höheren Schicht angeboten und genutzt werden. Um die topologische Sicht auf ein Netz in den einzelnen Managementapplikationen zu definieren, ist deshalb erheblicher Bedienaufwand erforderlich, der zudem detaillierte Kenntnisse über den Aufbau des Netzes und die im Netz aktivierten Dienste (z.B. geschaltete Verbindungen) erfordert und fehlerträchtig ist.
- Dynamische Vorgänge im Netz wie das Hinzufügen- oder Entfernen von einzelnen Netzresourcen (z.B. Netzelemente, Baugruppen, Dienste) sind von Hand zwischen den einzelnen Applikationen zu synchronisieren. Dies erfordert neben einer hohen Disziplin bei der Erfassung der zu konfigurierenden Daten eine systematische Arbeitsweise, bei der die Änderungen zunächst aufgesammelt und erst dann weitergegeben werden, wenn eine ausreichende Anzahl von Daten und insbesondere ein passender Zeitpunkt gefunden sind. Diese Systematik reduziert zwar die Fehlerwahrscheinlichkeit bei der Konfiguration der unterschiedlichen Applikationen, macht das Gesamtsystem aber träge und schwerfällig gegenüber Änderungen.
- Die Topologie der Netzstruktur wird in zeitgemäßen Operations Systemen in jeder Managementapplikation separat eingegeben und verwaltet. Dabei ist die einzugebende Sicht abhängig sowohl von den durch eine Managementapplikation bedienbaren Technologie (z.B. einem Ausschnitt des Übertragungs- oder des Vermittlungslayers) als auch von den Konfigurationen, die im Netz mittels anderer Managementapplikationen vorgenommen werden (z.B. neue Pfade oder Netzelemente in der nächst tieferen Schicht). Wurde mit einem Managementsystem A im Netz eine neue Verbindung konfiguriert, so mussten dieses Wissen per Hand mit einzelnen Knofigurationskommandos in den Managementapplikationen eingegeben werden, die diese Verbindung als Basis für weitere Konfigurationen innerhalb ihrer Schicht verwenden.
- Um ein Kommunikationsnetz bestehend aus mehreren unterschiedlichen Technologien bedienen und steuern zu können, muss die Netzwerktopologie durch den Benutzer allen Managementapplikationen bekannt gemacht werden. Die Sicht einer Managementapplikation definiert sich dabei durch die Technologie, die mit einem System bedient werden kann.
- Von den einzelnen Applikationen werden oft räumliche begrenzte Teile einer bestimmten Schicht gesteuert. Diese werden auch Domäne bzw. Domain genannt. Die innerhalb einer Domäne angeordneten physikalischen Verbindungen (Leitungen, Kanäle) sind der Applikation meist bekannt. Dies gilt jedoch nicht für die physikalischen Verbindungen zwischen unterschiedlichen Domänen innerhalb einer Schicht.
   Diese werden häufig von keiner der domänenspezifischen Applikationen modelliert, weil jeder dieser Applikation für eine vollständige Modellierung dieser physikalischen Interdomain-Verbindung die jeweils am anderen Ende der Verbindung liegende Netzresource der Nachbardomain fehlt. Zur vollständigen Darstellung einer e2e-Sicht dieser Schicht können Interdomain-Verbindungen beispielsweise in einer speziellen Umbrella-Applikation gespeichert werden. Im Ergebnis bedeutet dies, dass die physikalischen Verbindungen einer Schicht häufig auf eine Vielzahl von domänenspezifischen und meist zumindest eine Umbrella-Applikation verteilt sind.
- Die Problematik besteht bei Diensten wie z.B. Standleitungen in vergleichbarer Weise, weil jede domänenspezifische Applikation jeweils nur einen Abschnitt des gesamten e2e-Dienstes sieht und überwacht, nicht jedoch die physikalische Interdomänen-Verbindung.

Eine Lösung für diese erfindungsgemäß erkannte Problemsituation sowie vorteilhafte Ausgestaltungen dieser Lösung sind in den Patentansprüchen angegeben.

Mit dieser Lösung ist eine Vielzahl von Vorteilen verbunden, die in den Ausführungsbeispielen der Erfindung beschrieben werden.
- Durch das automatische Einrichten einer topologischen Sicht des Kommunikationsnetzes für die Managementapplikationen wird die physikalische Topologie des Gesamtnetzes durch den Benutzer nur ein einziges mal eingeben. Die physikalische Netztopologie wird einmal in einem zentralen Topology Handler erfasst. Die Applikationen fragen die für ihre eigenen Funktionen (z.B. topologische Sicht, Dienstaufbau) erforderlichen Daten (z.B. Interdomänen Verbindungen) bzw. die Applikationen, bei denen die erforderlichen Daten verfügbar sind (z.B. Ports, Dienste einer niedrigeren Schicht) von dem Topology Handler ab.
- Durch ein unmittelbares Mitteilen derjenigen Resourcen, die dem Topology Handler zugeordnet sind, wird vorteilhaft die Rückmeldung und erneute Abfrage durch die anfragende Applikation der Resourcen vom Topology Handler zu einem Schritt zusammengefasst.
- Das Laden der topologischen Sicht in eine Managementapplikation kann durch entsprechende Filterung der rückgemeldeten Daten flexibel in einem oder mehreren Schritten erfolgen.
- Durch Einsatz der Übertragungslayer, die durch eine Managementapplikation bedient werden können, als Basisfilter wird der Suchraum für erforderlichen Resourcen effektiv auf einen für die jeweilige Anfrage relevanten Suchraum begrenzt. Dieser Filter kann zur Steigerung der Effizient und Genauigkeit flexibel je nach Bedarf auf weitere Objekttypen erweitert werden, z.B. Netzelemente, Ports, Termination Points, physikalische und/oder logische Verbindungen, Dienste wie z.B. im Netz geschaltete Pfade und weitere logische Objekte.
- Durch Einsatz einer generischen Lösung, bei der eine Managementapplikation, die sich bei dem Topology Handler anmeldet, um die für sich erforderlichen NEs und Objekte zu laden, zugleich bekannt gibt, welche Übertragungslayer durch sie bedient werden können, wird im Topoloy Manager automatisch mit der Zeit das Wissen aufgebaut und erweitert, welche Objektinstanzen in welcher Applikation verfügbar bzw. welche Resourcen welcher Applikation zugeordnet sind.
- Für einen Netzbetreiber ergeben sich durch Reduktion der OPEX (OPerational EXpenses) wirtschaftliche Vorteile.
- Die logischen Sichten der Managementapplikationen werden dem Benutzer automatisch zur Verfügung gestellt.
- Der Benutzer muss nicht unterscheiden zwischen dem physikalischen Netz und der logischen Sicht des zu bedienenden Managementsystems.
- Der Benutzer braucht keine Kenntnis der Konfigurationenvorgänge im Netz, da die topologische Sicht der einzelnen Managementapplikationen automatisch synchronisiert wird.
- Eine Umsetzung der Erfindung erfordert keine prinzipiellen Änderungen des bisherigen Standes der Technik, sondern lässt sich nachträglich als Baustein - insbesondere als modifiziertes oder zusätzliches Computerprogrammprodukt - einfügen. Der Zeitpunkt der Realisierung kann unabhängig von anderen Funktionen gewählt werden. Bei entsprechender Entkopplung der einzelnen Schichten durch Vermeidung von bottom-up Referenzen kann das System von der untersten Ebene zu der höchsten Ebene schrittweise realisiert werden.

Die Erfindung wird im Folgenden anhand von weiteren Ausführungsbeispielen, die auch in den Figuren dargestellt sind, erläutert. Es sei betont, dass die aufgezeigten Ausführungen der Erfindung trotz ihrer teilweise sehr detailgetreuen Darstellung lediglich beispielhafter Natur und nicht einschränkend zu verstehen sind. Es zeigen:
- Figur: 1 eine beispielhafte Anordnung, umfassend ein zentrales Operations System OS mit Applikationen A zur Steuerung von dezentralen Elementen NE eines Kommunikationsnetzes KN
- Figur 2: eine bespielhafte Zuordnung von Resourcen NE, TP, CC, CON, PATH, VLAN des Kommunikationsneztes KN zu Applikationen A sowie Beziehungen zwischen diesen Resourcen
- Figuren 3-7: einen beispielhaften Ablauf der Erfindung in einer nach den vorstehenden Figuren ausgebildeten Ablaufumgebung

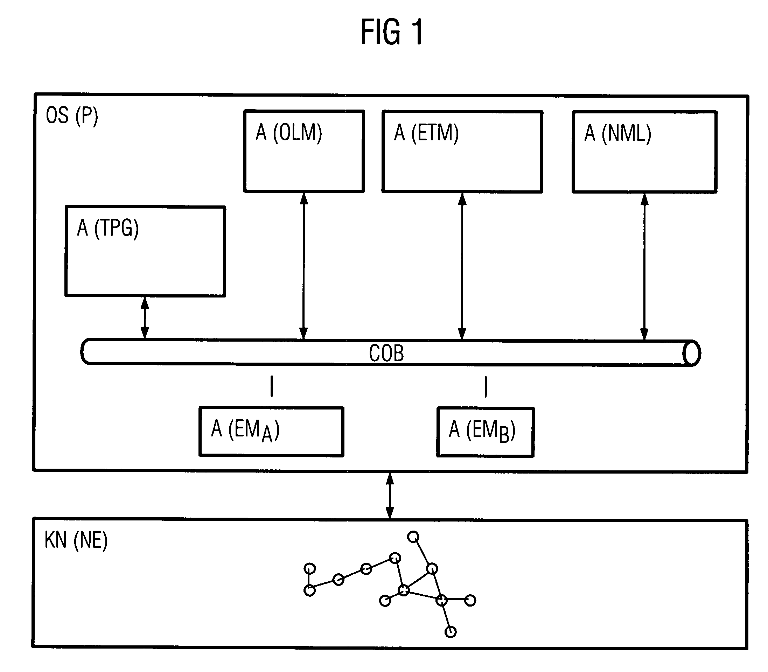

Die Ausführungsbeispiele werden anhand der in Figur 1 dargestellten Anordnung erklärt. Diese Anordnung umfasst ein zentrales Operations System OS mit Applikationen A zur Steuerung von dezentralen Elementen NE eines Kommunikationsnetzes KN, die insbesondere als Topology Handler TPG, Optical Link Manager OML, Network Management Layer NML, Ethernet Manager ETM oder Element Manager EM_{A}, EM_{B} ausgebildet sind. Den als Applikationen A ausgebildeten Erzeugnissen können die TMN Funktionsblöcke Operations Systems Function und Workstation Function, den als Netzelemente NE ausgebildeten Erzeugnissen der TMN Funktionsblock Network Element Function zugeordnet sein. Die Applikationen A sind untereinander durch ein Datennetz COB verbunden. Das Operations System OS und die Netzelemente NE sind durch ein in der Fachwelt als Data Communication Network (DCN) bezeichnetes Datennetz verbunden. Die Erzeugnisse umfassen Hardware - insbesondere Prozessoren und Speichermittel - zur Durchführung von Computerprogrammprodukten P, mit denen die Funktionen realisiert sind.

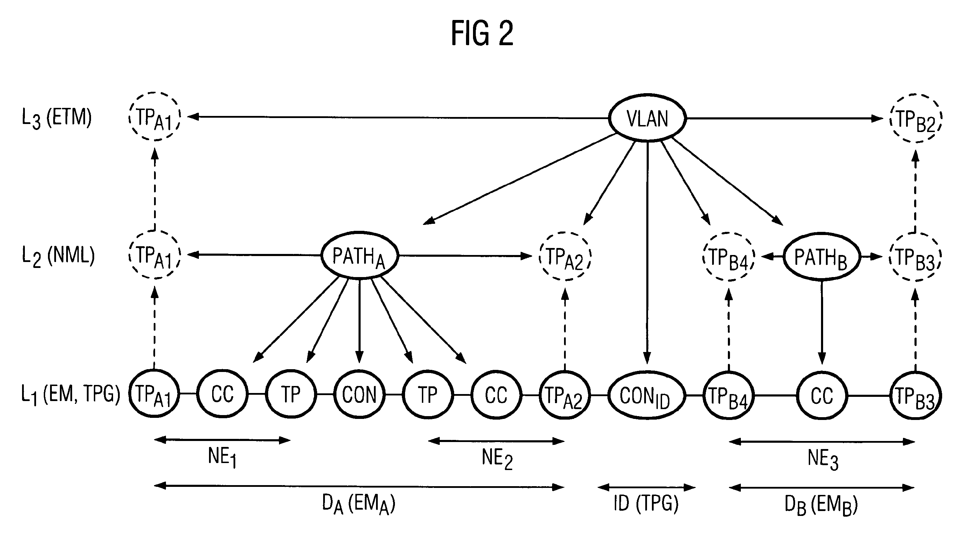

In Figur 2 sind einige, typische Resourcen eines zeitgemäßen Kommunikationsnetzes KN aufgezeigt. Die Resourcen sind als Termination beispielsweise als Termination Point TP, Cross Connection CC, Connection CON, Standleitung PATH, virtuelle Netzverbindung VLAN oder als Netzelement NE ausgebildet. Sie sind unterschiedlichen Applikationen A, Domänen D und/oder Schichten L zugeordnet. Die Resourcen TP, CC, CON sind den Element Managern EM, die Resource CON_{ID} dem Topology Handler, die Resourcen PATH dem Network Managerment Layer NML und die Resource VLAN dem Ethernet Manager ETM zugeordnet. Weiterhin ist eine Zuordnung der Resourcen zu drei Schichten L₁, L₂, L₃ und zwei Domänen D_{A}, D_{B} dargestellt.

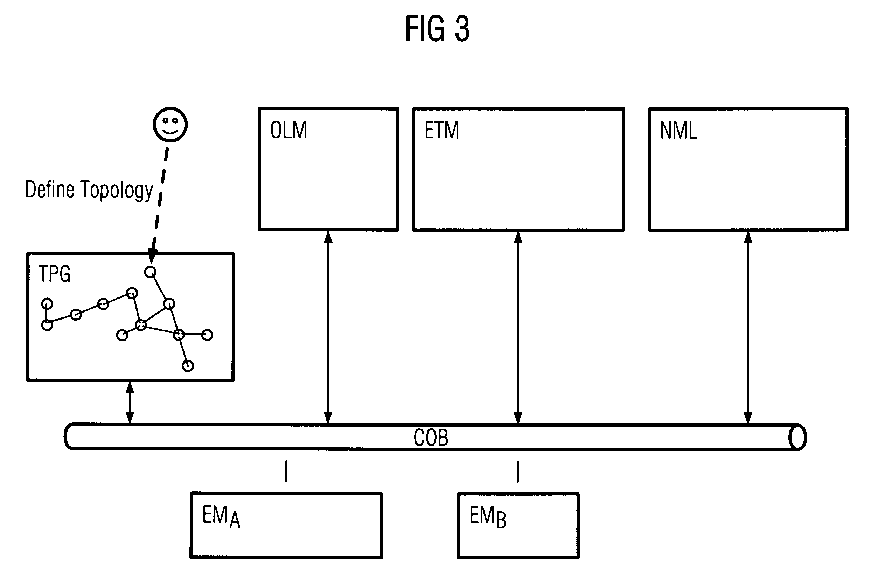

In den Figuren 3-7 ist eine Ausführungsvariante der Erfindung mit einer gestuften Abfrage durch die Applikation Ethernet Manager ETM dargestellt. Die einzelnen Verfahrensschritte sind mit Hilfe von Pfeilen visualisiert, die für folgende Schritte repräsentativ sind:
- Figur 3: Zunächst wird die Topologie des Kommunikationsnetzes KN einmal im Topology Handler TPG erfasst. Dies kann beispielsweise durch die dargestellte einmalige, manuelle Konfiguration durch den Netzbetreiber erfolgen. Alternativ kann die Topologie auch automatisch von den Applikationen A abgefragt werden. Insbesondere kann diese Abfrage schrittweise bewirkt werden, beispielsweise indem dem Topology Handler TPG von den Applikationen A bei einer Anfrage an den Topology Handler TPG oder einer erstmaligen Registrierung beim Topology Handler TPG die der Applikation A zugeordneten Resourcen mitgeteilt werden.

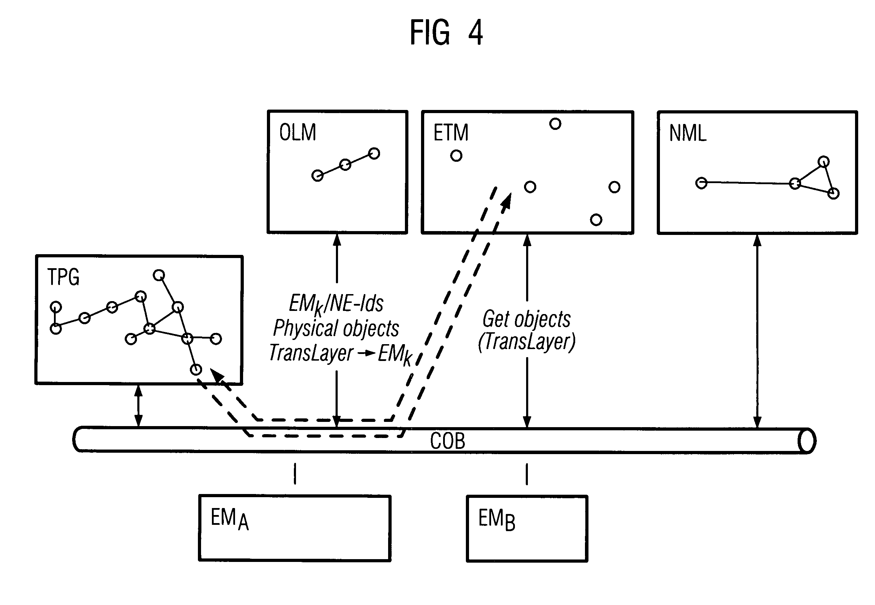

- Figur 4: Sodann werden die für die Applikation ETM erforderlichen Netzelemente NE am Topology Handler TPG abgefragt, von dem an die abfragende Applikationen ETM eine gefilterte Liste von Netzelementen NE zurückgeliefert wird.
Vorteilhaft werden für e2e Applikationen Übertragungslayer als Filter für den Aufbau der topologischen Netzsicht eingesetzt. Zur Steigerung der Ef- fizient und Genauigkeit kann der Filter flexibel je nach Bedarf auf weitere Objekttypen erweitert werden, z.B. Netzelemente NE, Ports, Termination Points TP, physikalische Verbindungen CON oder Dienste wie z.B. im Netz geschaltete Standleitungen PATH und weitere logische Objekte wie z.B. virtuelle Netzverbindungen VLAN.
Vorteilhaft werden die Filter so gewählt, dass genau diejenigen Resourcen mitgeteilt werden, die für die Bearbeitung der angefragten Daten durch die anfragende Applikation A erforderlich sind. Dies kann beispielsweise durch eine entsprechend klare Anfrage der Applikation A bewirkt werden, oder durch Berücksichtigung eines entsprechenden, speziellen Wissens des Topology Handlers TPG über das Umfeld der anfragenden Applikation A.

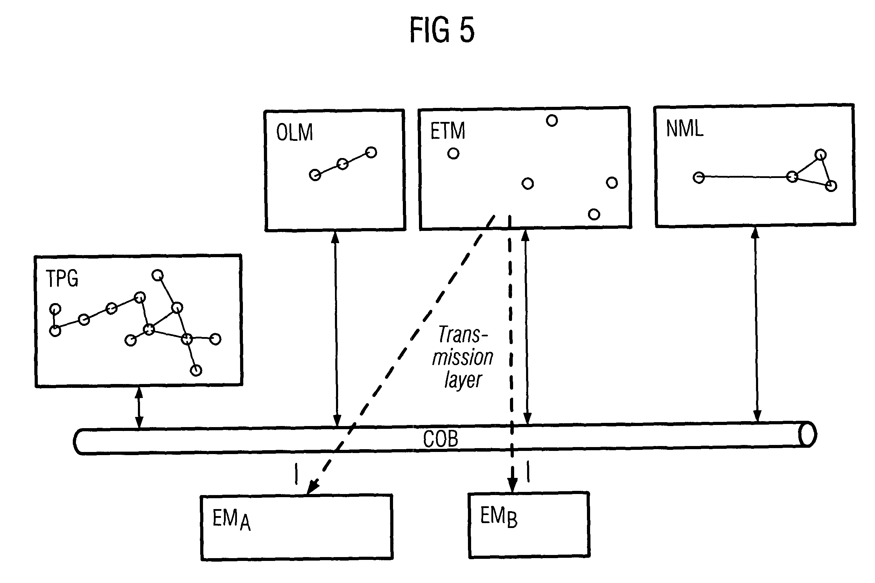

- Figur 5: Von den für das Management der in diese Liste angegebenen Netzelemente NE zuständigen Element Managern EM werden die Resourcen abgefragt.

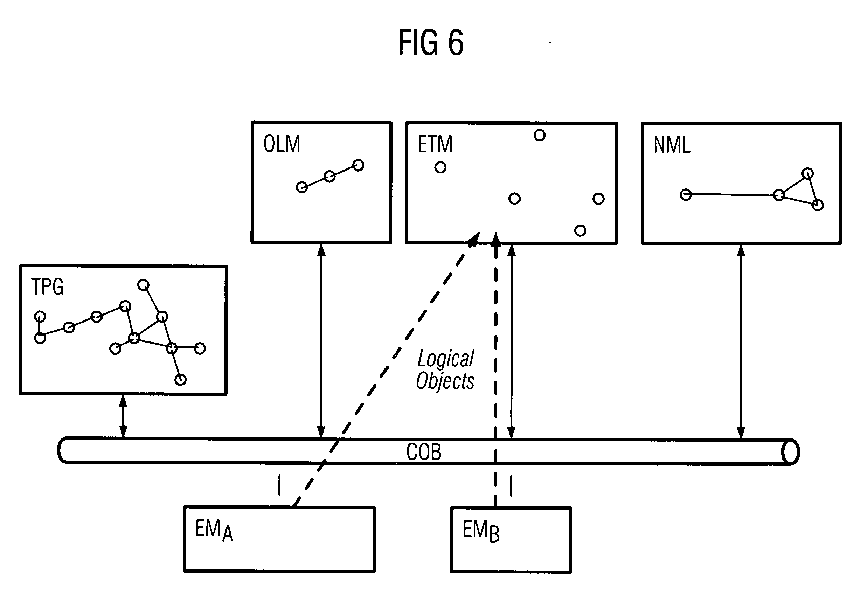

- Figur 6: Als Antwort werden die von den Element Managern EM werden die Resoucen bzw. die sie repräsentierenden Objektinstanzen/NE-Objekte mitgeteilt.

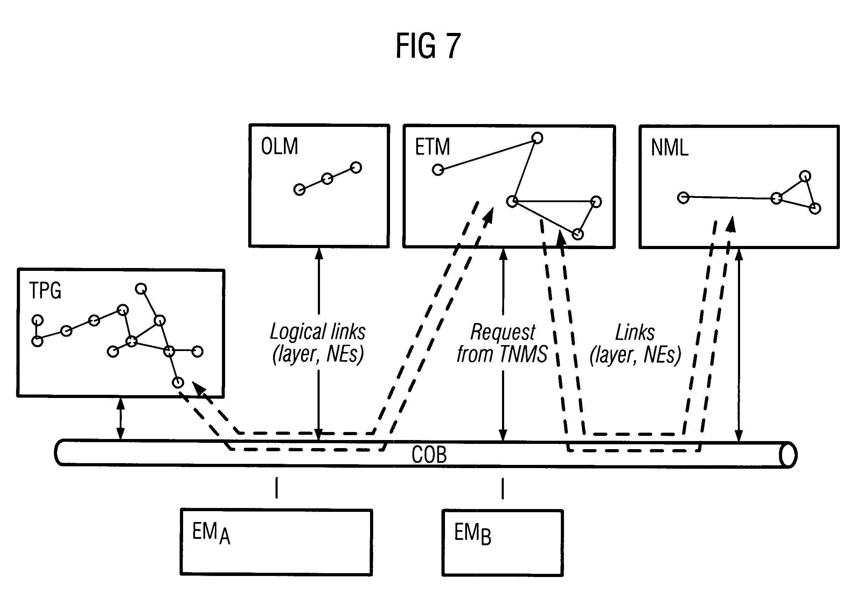

- Figur 7: Im Anschluss werden Verbindungen, insbesondere physikalische Verbindungen CON_{ID} oder logische Verbindungen bzw. Standleitungen PATH am Topology Handler TPG angefordert.
Entspricht die angeforderte Verbindung einer ihm zugeordneten, physikalischen Verbindung CON_{ID}, bedient der Topology Handler TPG diese Anfrage unmittelbar, beispielsweise indem die dem Topology Handler TPG zugeordnete Resource CON_{ID} mitgeteilt wird.
Handelt es sich um einen logischen Übertragungslayer, gibt der Topology Handler TPG die Information zurück, von welcher Applikation A die angefragten Daten anzufordern sind. Die anfragende Managementapplikation ETM holt sich in diesem Fall die erforderlichen Daten von der mitgeteilten Managementapplikation A (Objektinstanz).

Sobald der Applikation Ethernet Manager ETM alle erforderlichen Daten vorliegen, kann von dieser der Dienst bewirkt werden, für den die Daten erforderlich sind. Dieser Dienst kann z.B. eine automatische Generierung bzw. Synchronisation einer topologischen Sicht des Netzes aus dem Blickwinkel des Ethernet Managers ETM sein oder ein Aufbau einer virtuellen Netzverbindung VLAN.

Selbstverständlich können die aufgezeigten Schritte auch mit einer einzigen Anfrage bewirkt werden. Die gewählte Realisierungsvariante hängt von den individuellen Anforderungen der jeweiligen Applikation A ab. Wenn beispielsweise schnelle Reaktionszeiten wichtig sind, wird man eher zu einer schrittweisen Realisierung neigen, weil dann pro Schritt weniger Aufgaben auf einmal bewirkt werden müssen. Wenn man hingegen möglichst von Anfang an vollständige Informationen besitzen möchte, werden die erforderlichen Daten eher in einem einzigen Schritt abfragt, weil dann die granulare Abfragetechnik nicht erforderlich ist.

Durch die Erfindung wird ein generischer Weg aufgezeigt, wie die topologische Netzsicht in einem verteilten System für das Management von Kommunikationsnetzen durch e2e Applikationen OML, ETM, NML automatisch erkannt und synchronisiert werden kann. Dabei müssen wegen der Verwendung einer zentralen Komponente für die Definition des physikalischen Netzes (Topology Handler TPG) die restlichen Komponenten bzw. Applikationen A des verteilten Operations Systems OS kein Wissen über andere Komponenten bzw. Applikationen A haben.

Mit der Erfindung wird somit sichergestellt, dass die angezeigten Informationen immer aktuell sind, keine inkonsistenten Zwischenstände zur Anzeige kommen, die einzelnen Komponenten des Gesamtsystems nur in geringem Maße belastet werden und damit die Stabilität des Gesamtsystems erhöht wird.

Abschließend sei darauf hingewiesen, dass die Beschreibung der für die Erfindung relevanten Komponenten des Systems grundsätzlich nicht einschränkend in Hinblick auf eine bestimmte physikalische Realisierung oder Zuordnung zu verstehen ist. Für einen einschlägigen Fachmann ist insbesondere offensichtlich, dass alle Erzeugnisse teilweise oder vollständig in Software / Computerprogrammprodukten und/oder über mehrere physikalische Einrichtungen verteilt realisiert werden können.

## Patentansprüche

1. Verfahren zur Kopplung von Management Applikationen (OLM, ETM, NML, EM), mit
- einer Vielzahl von Resourcen (TP, CC, CON, PATH, VLAN) eines Kommunikationsnetzes (KN),
- einer zumindest teilweisen Zuordnung der Resourcen zu den Applikationen,
- einer Topology Handler Applikation (TPG), dem die Zuordnungen zumindest teilweise bekannt sind,
bei dem die Kopplung bei Zugriff einer Applikation auf ihr nicht zugeordnete Resourcen mit folgenden Schritten erfolgt:
- Anfrage an den Topology Handler, dass ein Zugriff auf nicht zugeordnete Resourcen erforderlich ist,
- Mitteilung an die anfragende Applikation, welche Resourcen bei welchen Applikationen abgefragt werden sollen,
- Abfrage dieser Resourcen bei den mitgeteilten Applikationen.

2. Verfahren nach dem vorstehenden Anspruch, bei dem von dem Topology Handler Resourcen - insbesondere Interdomänen-Verbindungen - unmittelbar mitgeteilt werden, wenn sie ihm selbst zugeordnet sind.

3. Verfahren nach einem der vorstehenden Ansprüche, bei dem die Resourcen als Ports, physikalische oder logische Verbindungen bzw. Dienste ausgebildet sind.

4. Verfahren nach einem der vorstehenden Ansprüche, bei dem diejenigen Resourcen mitgeteilt werden, die für die Bearbeitung der Anfrage erforderlich sind.

5. Verfahren nach dem vorstehenden Anspruch, bei dem die Resourcen - insbesondere Resourcen bestimmter Netzschichten, Netzelemente und/oder bestimmmter Art wie Termination Points oder Ports - in Abhängigkeit von der Anfrage und/oder der anfragenden Applikation gefiltert ermittelt werden.

6. Verfahren nach einem der vorstehenden Ansprüche, bei dem dem Topology Handler von der anfragenden Applikation die ihr zugeordneten Resourcen mitgeteilt werden.

7. Erzeugnis - insbesondere als Operations System (OS) eines TMN System ausgebildete zentrale Steuerung -, umfassend Mittel, die zur Durchführung der Schritte eines Verfahrens nach einem der vorstehenden Verfahrensansprüche eingerichtet sind.

8. Erzeugnis - insbesondere eine Management Applikation (OLM, ETM, NML, EM) oder eine Topology Handler Applikation (TPG), umfassend
- Mittel, die zur Durchführung derjenigen Schritte eines Verfahrens nach einem der vorstehenden Verfahrensansprüche die von dem Erzeugnis bewirkt werden, speziell eingerichtet sind,
- Mittel, die zur Durchführung von gemäß dem Verfahren vorgeschriebenen Wechselwirkungen des Erzeugnisses mit weiteren Erzeugnissen, von denen die restlichen Schritte des Verfahrens durchgeführt werden, eingerichtet sind.

9. Erzeugnis nach einem der beiden vorstehenden Ansprüche, ausgebildet als Computerprogrammprodukt (P), dessen Programmcode zur Durchführung des Verfahrens von zumindest einem Prozessor ausgeführt wird.
